Europäisches Patentamt

European Patent Office

Office européen des brevets

(11) Veröffentlichungsnummer: **0 332 722**
**A1**

## EUROPÄISCHE PATENTANMELDUNG

(21) Anmeldenummer: 88104057.0

(22) Anmeldetag: 15.03.88

(51) Int. Cl.⁴: **B25B 21/00** , //F16B13/14

(43) Veröffentlichungstag der Anmeldung:
20.09.89 Patentblatt 89/38

(84) Benannte Vertragsstaaten:
AT BE CH DE ES FR GB GR IT LI LU NL SE

(71) Anmelder: Meyers, Claude
rue Laneau 91
B-1020 Bruxelles(BE)

(72) Erfinder: Meyers, Claude
rue Laneau 91
B-1020 Bruxelles(BE)

(74) Vertreter: Graf, Helmut, Dipl.-Ing.
Greflinger Strasse 7 Postfach 382
D-8400 Regensburg(DE)

(54) Spannkopf für stabförmige Anker, insbesondere Maueranker.

(57) Bei einem Spannkopf (6), mit welchem an diesem Spannkopf (6) durch eine Einspanneinrichtung eingespannte Maueranker (3) um ihre Längsachse drehend in Bohrungen (2) eingebracht werden können, weist die Einspanneinrichtungen einen an einem Ende um eine Schwenkachse schwenkbaren Einspann- oder Klemmhebel (19) auf, der eine die Schwenkachse (21) zumindest teilweise umschließende und spiralartig verlaufende Einspannfläche (23) besitzt, die bei im Spannkopf (6) eingespanntem Anker (3) mit einem Eingriffsbereich gegen die Umfangsfläche dieses Ankers anliegt. Die Einspanneinrichtung besteht weiterhin aus einer am Spannkopf (6) fest vorgesehenen Anlagefläche, die bezogen auf die Längs-bzw. Drehachse des Spannkopfes der Einspannfläche bzw. dem jeweiligen Eingriffsbereich gegenüberliegt.

Fig. 2

## Spannkopf für stabförmige Anker, insbesondere Maueranker

Die Erfindung bezieht sich auf einen Spannkopf für stabförmige Anker und dabei insbesondere für Maueranker entsprechend Oberbegriff Patentanspruch 1.

Bekannt ist ein Verfahren, bei dem stabförmige Anker (beispielsweise Maueranker) in vorbereiteten Bohrungen beispielsweise eines Betonbauteils, z.B. Betonwand usw. auf chemische Weise unter Verwendung eines Zweikomponenten-Kleber-Systems verankert werden. Hierbei wird zunächst in die jeweilige Bohrung eine in der Regel aus Glas bestehende Patrone eingebracht, die die beiden Komponenten des Klebers, Härter und vorzugsweise mit einem Füller (z.B. Sand) gemischter Binder getrennt enthält. Im Anschluß daran wird der mit einem Ende an einem Spannkopf eines Einsetzgerätes eingespannte Anker mit seinem anderen Ende in die Bohrung eingeführt, und zwar bei durch das Einsetzgerät um seine Längsachse rotierend angetriebenem Spannkopf und damit auch um seine Längsachse rotierendem Anker, so daß nach dem Zerdrücken bzw. Zerschlagen der Patrone (durch das in die Bohrung eingeführte Ende des Ankers) die beiden Komponenten des Klebers freigesetzt und durch den um seine Längsachse umlaufenden Anker vermischt werden. Diese Kleber-Mischung gelangt mit zunehmendem Einführen des Ankers in die Bohrung auch in den zwischen der Umfangsfläche des Ankers und der Innenfläche der Bohrung gebildeten Spalt, so daß dann nach dem Abnehmen des Spannkopfes von dem Anker und nach dem Aushärten der Klebermischung der Anker in der Bohrung verankert ist.

Die bei diesem Verfahren verwendeten Einsetzgeräte sind herkömmliche, elektrisch oder pneumatisch betätigte Bohrmaschinen mit dem üblichen Spannkopf oder der üblichen Werkzeugeinspannung (Spannfutter).

Der Erfindung liegt die Aufgabe zugrunde, einen für das vorbeschriebene Verfahren geeigneten Spannkopf aufzuzeigen, der sich durch eine besonders einfache, aber dennoch robuste Konstruktion sowie durch eine besonders einfache Handhabung auszeichnet.

Zur Lösung dieser Aufgabe ist ein Spannkopf entsprechend dem kennzeichnenden Teil des Patentanspruches 1 ausgebildet.

Der erfindungsgemäße Spannkopf läßt sich bei einfacher und dennoch robuster Konstruktion preiswert fertigen, zumal die Einspanneinrichtung nur ein einziges, bewegliches Element, nämlich den Einspann- oder Klemmhebel erfordert.

Der erfindungsgemäße Spannkopf, der an einer herkömmlichen Bohrmaschine befestigt werden kann, zeichnet sich auch durch eine besonders einfache Handhabung aus. So ist z.B. zum Einspannen des Ankers am Spannkopf sowie zum Abnehmen des Spannkopfes von dem eingebrachten Anker lediglich der Einspann- oder Klemmhebel gegen die Wirkung der wenigstens einen Feder zu schwenken.

Weiterbildungen der Erfindung sind Gegenstand der Unteransprüche.

Die Erfindung wird im folgenden anhand der Figuren an einem Ausführungsbeispiel näher erläutert. Es zeigen:

Fig. 1 in schematischer Darstellung einen Schnitt durch eine Gebäudewand, zusammen mit einem in einer Bohrung dieser Gebäudewand zu verankernden und an einem Spannkopf gehaltenen Maueranker;

Fig. 2 einen Längsschnitt durch den Spannkopf, zusammen mit dem in diesem Spannkopf gehaltenen Maueranker;

Fig. 3 eine Draufsicht auf das in der Fig. 2 linke Ende des Spannkopfes;

Fig. 4 einen Schnitt entsprechend der Linie I-I der Fig. 2;

Fig. 5 in Einzeldarstellung den als Schwenkhebel ausgebildeten Einspann- bzw. Klemmbacken des Spannkopfes der Fig. 1-4.

In den Figuren ist 1 ein Betonbauteil, beispielsweise eine Betonwand, die mit einer Bohrung 2 versehen ist, in welcher ein Maueranker 3 eingebracht und verankert werden soll. Der Maueranker 3, der im einfachsten Fall ein stabförmiges Element aus Stahl mit im wesentlichen kreiszylinderförmiger Umfangsfläche ist, ist bei der dargestellten Ausführungsform ein mit einem Außengewinde versehener Gewindebolzen. Der Maueranker 3 kann aber auch ein anderes, stabförmiges Element, beispielsweise eine Länge eines üblichen, mit Rippen versehenen Baustahls sein. Zur Verankerung des Mauerankers 3 in der in ihrem Querschnitt an den Außenquerschnitt dieses Mauerankers angepaßten Bohrung 2 dient das ober bereits erwähnte Zwei-Komponenten-Kleber-Sytem, dessen mit dem Füller versetzter Binder (Epoxyd-Harz oder Polyesterharz) und dessen Härter in den Glaspatronen 4 und 5 getrennt untergebracht sind.

Zum Verankern des Mauerankers 3 in der Bohrung 2 wird zunächst die Glaspatrone 4 in die Bohrung 2 eingesetzt. Anschließend wird der an einem Ende in einem Spannkopf 6 eingespannte Maueranker mit seinem anderen Ende bei um seine Längsachse L rotierend angetriebenem Spannkopf 6 in die Bohrung 2 eingeführt. Dabei werden die beiden Glaspatronen 4 und 5 zerdrückt und der Binder sowie der Härter vermischt, so daß der Maueranker 3 nach dem Aushärten der Kleber-Mischung in der Bohrung 2 verankert ist. Zum rotierenden Antrieb des Spannkopfes 6 dient beispielsweise eine übliche, elektrisch oder pneumatisch betriebene Bohrmaschine.

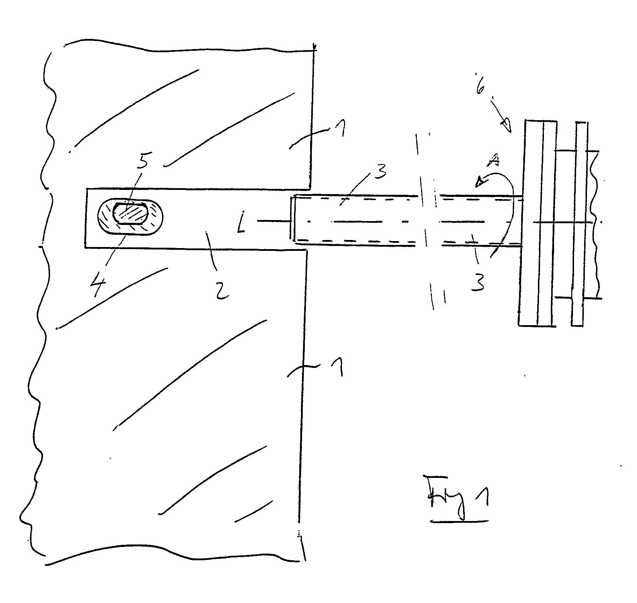

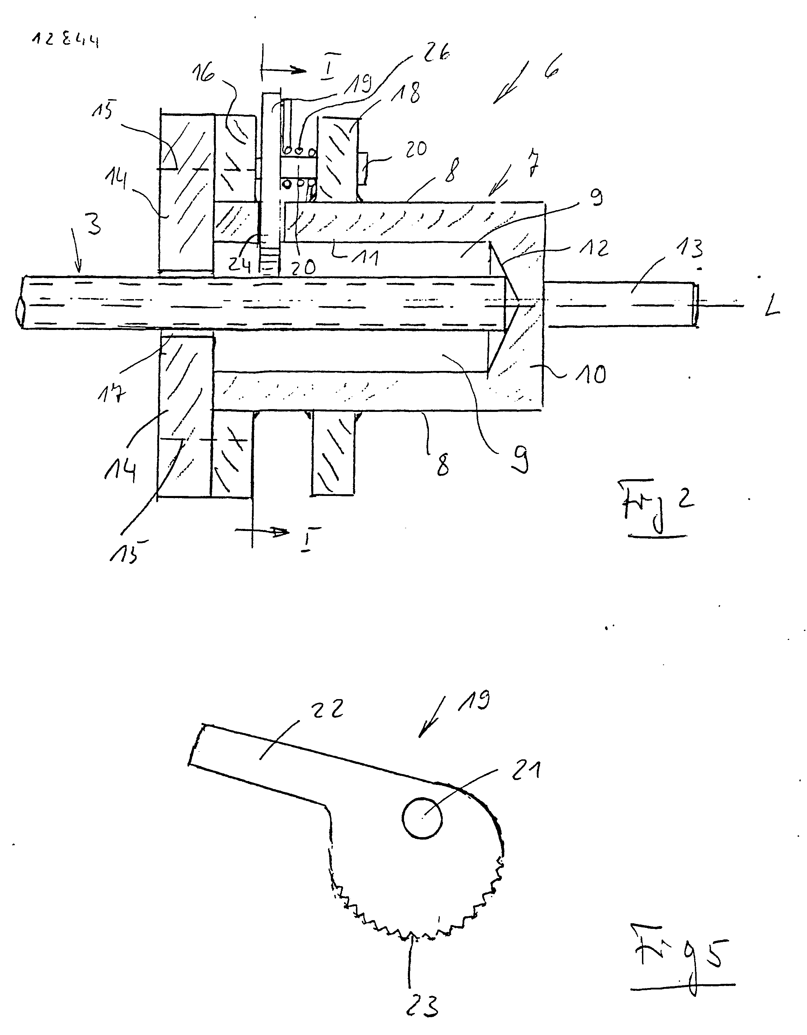

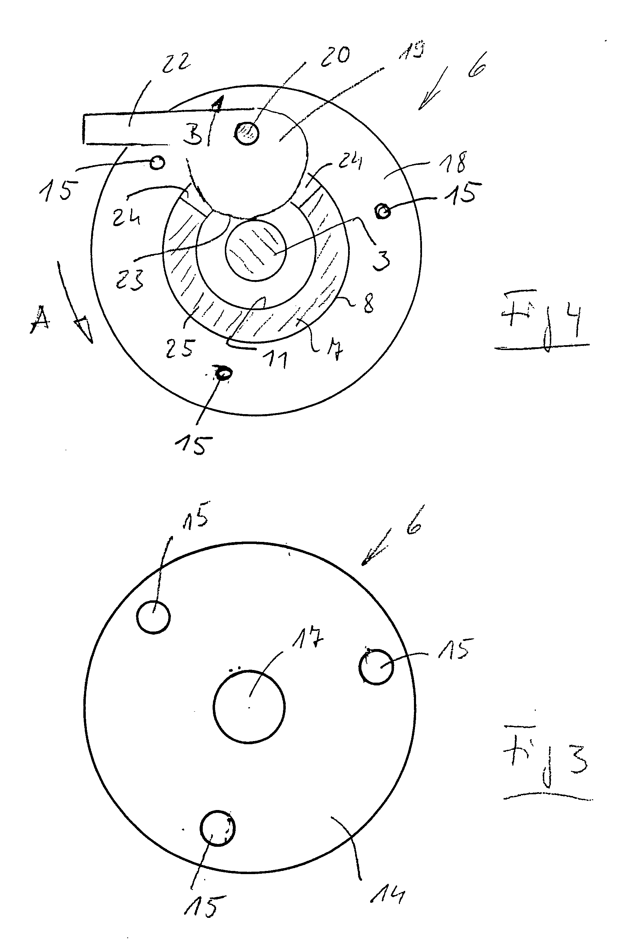

Der Spannkopf 6 bzw. die diesen Spannkopf bildenden Teile sind in den Fig. 2-5 im einzelnen dargestellt. Der Spannkopf 6 besteht zunächst aus einem Element 7, welches bei der dargestellten Ausführungsform eine kreiszylinderförmige, die Längsachse L des Elementes 7 sowie des Spannkopfes 6 konzentrisch umschließende Umfangsfläche 8 aufweist. Im Inneren des Elementes 7 ist eine Ausnehmung 9 gebildet, die sich nahezu über die gesamte axiale Länge des Elementes 7 erstreckt, an einem Ende, d.h. bei der für die Fig. 2 gewählten Darstellung am linken Ende des Elementes 7 offen und an dem anderen Ende, d.h. bei der für die Fig. 2 gewählten Darstellung an dem rechten Ende des Elementes 7 durch einen Wandabschnitt 10 verschlossen ist, der einstückig mit den übrigen Teilen des Elementes 7 hergestellt ist. Die Ausnehmung 9 besitzt bei der dargestellten Ausführungsform eine die Längsachse konzentrisch umschließende kreiszylinderförmige Innenfläche 11 sowie an dem Wandabschnitt 10 eine Bodenfläche 12, die konisch bzw. kegelförmig derart ausgebildet ist, daß die Spitze dieser kegelförmigen Bodenfläche 12 mit der Längsachse L zusammenfällt und die Ausnehmung 8 im Bereich dieser Spitze die größte axiale Länge besitzt.

An der der Ausnehmung 9 abgewendeten Außenseite des Wandabschnittes 10 ist ein von diesem Wandabschnitt wegstehender Schaft 13 vorgesehen, der ebenfalls einstückig mit dem Element 7 hergestellt ist und mit seiner Achse achsgleich mit der Längsachse L liegt. Mit diesem Schaft 13 kann der Spannkopf 6 an der üblichen Werkzeughalterung (Spannfutter) einer Bohrmaschine befestigt werden kann.

An der dem Wandabschnitt 10 abgewendeten Seite ist am Element 7 eine kreisscheibenförmige Platte 14 befestigt, und zwar mit Schrauben 15 an einem dort am Element 7 vorgesehenen und über die Umfangsfläche 8 wegstehenden, die Längsachse L konzentrisch umschließenden ringförmigen Flansch 16. Die Platte 14, die mit ihren Oberflächenseiten senkrecht zu der Längsachse L liegt, besitzt in der Mitte eine durchgehende Bohrung 17, deren Achse achsgleich mit der Längsachse L liegt. Der kreisförmige Durchmesser dieser Bohrung 17 ist gleich oder etwas größer als der Außendurchmesser der Maueranker 3. Bei im Durchmesser unterschiedlichen, zu verarbeitenden Mauerankern 3 ist der Durchmesser der Bohrung 17 vorzugsweise gleich oder etwas größer als der Außendurchmesser der stärksten, zu verarbeitenden Maueranker 3. Anstelle von einer Platte 14 können auch mehrere Platten 14 vorgesehen sein, deren Bohrungen 17 jeweils an unterschiedliche Durchmesser der Maueranker 3 angepaßt sind und die dann je nach Durchmesser des zu verarbeitenden Mauerankers 3 wahlweise am Element 7 befestigt werden.

Zwischen dem Flansch 16 und einem weiteren, dem Wandabschnitt 10 näherliegenden ringförmigen Flansch 18, der ebenfalls am Element 7 befestigt ist, die Längsachse L konzentrisch umschließt und über die Umfangsfläche 8 radial wegsteht, ist ein Einspann- oder Klemmhebel 19 im Bereich eines Endes um eine außerhalb des Elementes 7 liegende und parallel zur Längsachse L verlaufende Achse schwenkbar befestigt. Diese Schwenkachse ist von einem Gelenkbolzen 20 gebildet, der durch eine Lagerbohrung 21 des Einspann- oder Klemmhebels 19 hindurchreicht und jeweils beidendig in den beiden Flanschen 16 und 18 gehalten ist. Der aus Flachmaterial hergestellte Einspann- oder Klemmhebel 19 ist dabei so auf dem Gelenkbolzen 20 angeordnet, daß er mit seinen beiden Oberflächenseiten senkrecht zur Achse des Gelenkbolzens 21 liegt und daß ein an diesem Einspann- oder Klemmhebel 19 gebildeter und sich im wesentlichen radial von der Lagerbohrung 21 wegerstreckender Hebelarm 22 in der normalen Drehrichtung A, in der der Spannkopf 6 beim Einbringen eines Mauerankers 3 in die entsprechende Bohrung 2 durch eine Bohrmaschine angetrieben wird, das freie Ende des Hebelarmes 22 der Lagerbohrung 21 bzw. dem Gelenkbolzen 20 voreilt. An seinem mit der Lagerbohrung 21 versehenen Ende weist der Einspann- oder Klemmhebel 19 eine mit einer Vielzahl von Zähnen versehene Einspannfläche 23 auf. Diese verläuft bezogen auf die Lagerbohrung 21 nach Art einer Spirallinie derart, daß der Abstand x, den die Einspannfläche 23 von der Lagerbohrung 21 besitzt, von dem einen, dem Hebelarm 22 entfernt liegenden Ende der Einspannfläche 23 zu dem anderen, dem Hebelarm 22 benachbarten bzw. in eine Längsseite dieses Hebelarms übergehenden Ende der Einspannfläche 23 zunimmt, d.h. bei der für die Fig. 4 und 5 gewählten Darstellung nimmt der Abstand x in Richtung des dortigen Pfeiles B zu, der auch die Schwenkrichtung anzeigt, aus der der Einspann- oder Klemmhebel 19 aus einer Ruhe- oder Ausgangsstellung schwenkbar ist.

Der Einspann- oder Klemmhebel 19 ist zwischen den beiden Flanschen 16 und 18 derart angeordnet, daß er der dem Flansch 18 zugewendeten Seite des Flansches 16 unmittelbar benachbart liegt. Mit seinem die Einspannfläche 23 verbreiterten Ende reicht der Einspann- oder Klemmhebel 19 durch eine, insbesondere auch an die Materialdicke des Hebels 19 angepaßte Öffnung 24, die in dem die Umfangsfläche 8 sowie die Innenfläche 11 bildenden Wandabschnitt 25 des Elementes 7 vorgesehen ist, in die Ausnehmung 9 derart hinein, daß bei in der Ausgangsstellung befindlichem Einspann- oder Klemmhebel 19, aber auch bei aus dieser Ausgangsstellung über einen vorgegebenen Winkelbereich geschwenktem Einspann- oder Klemmhebel 19 die Einspannfläche 23 jeweils einen radialen Abstand von der Längsachse L aufweist, der kleiner ist als der halbe Durchmesser der Bohrung 17, wobei dieser radiale Abstand der Einspannfläche 23 von der Längsachse L durch die Formgebung der Einspannfäche 23 mit zunehmendem Schwenkwinkel (in Richtung des Pfeiles B) aus seiner Ruhestellung zunimmt. Durch eine Torsionsfeder 26, die auf dem zwischen dem Einspann- oder Klemmhebel 19 und dem Flansch 18 liegenden Teil des Gelenkbolzens 20 angeordnet ist und mit einem Ende gegen die Umfangsfläche 9 des Elementes 7 sowie mit dem anderen Ende gegen den Hebelarm 22 anliegt, ist der Einspann-oder Klemmhebel 19 in seine Ausgangsstellung vorgespannt, in welcher der Hebelarm 22 gegen einen Anschlag anliegt, der beispielsweise von der Umfangsfläche 8 oder von dem Ende einer Schraube 15 gebildet ist, welches (Ende) über die dem Flansch 18 zugewendete Seite des Flansches 16 vorsteht. Gegen die Wirkung der Torsionsfeder 26 ist der Einspann- oder Klemmhebel 19 in Richtung des Pfeiles B aus seiner Ausgangsstellung schwenkbar.

Zum Einbringen eines Mauerankers 3 wird dieser mit seinem einen Ende durch die Bohrung 17 in das Innere bzw. in die Ausnehmung 9 des Spannkopfes 6 bzw. des Elementes 7 soweit eingeführt, bis dieses eingeführte Ende des Maueankers 3 gegen die konische Bodenfläche 12 zur Anlage kommt und sich dadurch eine Zentrierung des Maueankers 3 in der Form ergibt, daß die Achse dieses Maueankers zumindest in etwa achsgleich mit der Längsachse L liegt. Bei Einführen des Maueankers 3 in den Spannkopf 6 ist der Einspann- oder Klemmhebel 19 gegen die Wirkung der Torsionsfeder 26 in Richtung des Pfeiles B manuell soweit geschwenkt, daß der Einspann-oder Klemmhebel 19 bzw. dessen Einspannfläche 23 das Einführen nicht behindern. Nach dem Einführen des Maueankers 3 wird der Einspann- oder Klemmhebel 19 freigegeben, so daß dessen Einspannfläche 23 dann durch die Torsionsfeder 26 an einem von einem oder mehreren Zähnen gebildeten Eingriffsbereich gegen die Umfangsfläche des Maueankers 3 anliegt, der sich zumindest mit einem diesem Eingriffsbereich bezogen auf die Längsachse L gegenüberliegenden Teil seiner Umfangsfläche auch an der Fläche der Bohrung 17 abstützt. Somit ist zunächst einmal durch die Wirkung der Torsionsfeder 26 eine Einspannung des Maueankers 3 im Spannkopf 6 erreicht. Da die Einspannfläche 23 des Einspann- oder Klemmhebels 19 in bezug auf die Lagerbohrung 21 auch so geformt ist, daß der jeweilige, gegen die Umfangsfläche des Maueankers 3 anliegende Eingriffsbereich der Einspannfläche 23 mit dieser Lagerbohrung 21 auf einer gemeinsamen, radial zur Längsachse verlaufenden Linie liegt oder aber in Drehrichtung A des Spannkopfes 6 dieser Eingriffsbereich der Einspannfläche 23 der Lagerbohrung 21 geringfügig nacheilt, wirken beim Einbringen des Maueankers 3 in die Bohrung 2 am Spannkopf 6 auftretende Drehmomente im Sinne eines Schwenkens des Einspann-oder Klemmhebels 19 entgegen dem Pfeil B und verstärken dadurch die Einspannung des Maueankers 3 im Spannkopf 6.

Die vorbeschriebene Ausbildung des Spannkopfes 6 zeichnet sich durch eine besonders einfache, daher auch preiswerte, aber dennoch sehr robuste Konstruktion aus, die auch rauhen Einsatzbedingungen auf einer Baustelle gerecht wird. Eine besonders einfache Handhabung des Spannkopfes 6 ist unter anderem dadurch sichergestellt, daß zum Einspannen oder Freigeben des Maueankers 3 lediglich der Einspann- oder Klemmhebel 19 betätigt werden muß und daß durch die Bohrung 17 in Verbindung mit der konischen Bodenfläche 12 nach dem Einführen des Maueankers 3 in die Ausnehmung 9 eine Zentrierung dieses Maueankers in bezug auf die Längsachse L erreicht ist. Die preiswerte und dennoch robuste Konstruktion ist u.a. dadurch gewährleistet, daß der Spannkopf 6 außer dem Einspann- oder Klemmhebel 19 keine beweglichen Teile benötigt und insbesondere auch auf diesen Einspann-oder Klemmhebel 19 bzw. dessen Gelenkbolzen 20 keine in Richtung der Längsachse L wirkende Kräfte ausgeübt werden, da bei normaler, d.h. ordnungsgemäßer Verwendung sich der Maueanker 3 an der Bodenfläche 12 abstützt und in Fällen, wo dies nicht der Fall ist, ev. an der Einspannfläche 23 auftretende, in Richtung der Längsachse L verlaufende Kräfte durch die auch als Führung für den Einspann- oder Klemmhebel 19 wirkende Öffnung 24 von dem Einspann- oder Klemmhebel 19 direkt auf das Element 7 übertragen und damit von dem Gelenkbolzen 20 ferngehalten werden.

## Ansprüche

1. Spannkopf für stabförmige Anker, zur Verwendung bei Einsetzgeräten, mit denen diese Anker um ihre Längsachse drehend in vorbereitete Bohrungen eines Untergrundes eingebracht werden, wobei der Spannkopf eine sich in Längsrichtung dieses Spannkopfes erstreckende Ausnehmung zur Aufnahme eines Endes des jeweiligen Ankers sowie im Bereich dieser Ausnehmung eine Einspanneinrichtung zum Einspannen des jeweiligen Ankers aufweist,
dadurch gekennzeichnet, daß die Einspanneinrichtung aus einem, an einem Ende um eine parallel zur Längsachse (L) verlaufende Schwenkachse (20) am Spannkopf (6) schwenkbar vorgesehenen Einspann- oder Klemmhebel (19) besteht, der durch wenigstens eine Feder (26) in eine Ausgangsstellung vorgespannt ist und gegen die Wirkung dieser Feder aus der Ausgangsstellung um die Schwenkachse (20) schwenkbar ist sowie eine in die Ausnehmung (9) des Spannkopfes (6) hineinreichende und die Schwenkachse (20) zumindest teilweise umschließende Einspannfläche (23) besitzt, die bei im Spannkopf (6) eingespanntem Anker (3) mit einem Eingriffsbereich gegen die Umfangsfläche des Ankers (3) anliegt, daß die Einspanneinrichtung weiterhin aus einer am Spannkopf (6) fest vorgesehenen Anlagefläche (17) besteht, daß sich die Anlagefläche und die Einspannfläche (23) bzw. der jeweilige Eingriffsbereich dieser Einspannfläche (23) bezogen auf die Längsachse (L) gegenüberliegen, und daß die Einspannfläche (23) in bezug auf die Schwenkachse (20) des Einspann- oder Klemmhebels (19) derart geformt ist, daß der Eingriffsbereich mit zunehmendem Schwenkwinkel (B) des Einspann- oder Klemmhebels (19) aus seiner Ausgangsstellung einen zunehmenden radialen Abstand von der Längsachse (L), aber auch einen zunehmenden Abstand von der Anlagefläche (17) besitzt.

2. Spannkopf nach Anspruch 1, dadurch gekennzeichnet, daß der Einspann- oder Klemmhebel (19) gegen die Wirkung der wenigstens einen Feder (29) aus seiner Ausgangsstellung in einer Richtung (B) schwenkbar ist, die einer Drehrichtung (A) entgegengesetzt ist, in der der Spannkopf (6) beim Einbringen eines Ankers (3) um seine Längsachse (L) umlaufend angetrieben ist.

3. Spannkopf nach Anspruch 1 oder 2, dadurch gekennzeichnet, daß die Einspannfläche (23) des Einspann- oder Klemmhebels (19) in bezug auf die Schwenkachse (20) dieses Einspann-oder Klemmhebels (19) derart geformt ist, daß der von der Einspannfläche (23) gebildete, gegen den Anker (3) anliegende Eingriffsbereich auf einer radial zur Längsachse (L) des Spannkopfes (6) verlaufenden Linie liegt, die auch die Schwenkachse (20) des Einspann- oder Klemmhebels (19) schneidet.

4. Spannkopf nach Anspruch 1 oder 2, dadurch gekennzeichnet, daß die Einspannfläche (23) des Einspann- oder Klemmhebels (19) in bezug auf die Schwenkachse (20) dieses Hebels einen solchen Verlauf aufweist, daß der gegen den Anker (3) anliegende Eingriffsbereich dieser Einspannfläche (23) bezogen auf eine Drehrichtung (A), in der der Spannkopf (20) beim Einbringen des Ankers (3) um seine Längsachse (L) rotierend angetrieben ist, der Schwenkachse (20) des Einspann- oder Klemmhebels (19) geringfügig nacheilt.

5. Spannkopf nach einem der Ansprüche 1-4, dadurch gekennzeichnet, daß die Ausnehmung (9) des Spannkopfes (6) an einem Ende (10) verschlossen ist und dort eine kegelförmige oder konische Bodenfläche (12) in der Form besitzt, daß die Spitze dieser kegelförmigen oder konischen Bodenfläche (12) mit der Längsachse (L) zusammenfällt und die Ausnehmung (9) im Bereich dieser Spitze die größte axiale Länge besitzt.

6. Spannkopf nach einem der Ansprüche 1-5, dadurch gekennzeichnet, daß die Anlagefläche von einem Teil der Innenfläche der Ausnehmung (9) gebildet ist.

7. Spannkopf nach einem der Ansprüche 1-5, dadurch gekennzeichnet, daß die Einspannfläche (23) und die wenigstens eine Anlagefläche in Richtung der Längsachse (L) des Spannkopfes (6) gegeneinander versetzt sind, wobei vorzugsweise die Anlagefläche von der Innenfläche oder einem Teilbereich der Innenfläche einer Bohrung (17) gebildet ist, die in einer Platte (14) vorgesehen ist, welche an einem Ende eines die Ausnehmung (9) aufweisenden Teiles (7) des Spannkopfes (6) befestigt ist, und wobei vorzugsweise die Ausnehmung (9) einen größeren Durchmesser aufweist als die Bohrung (17).

8. Spannkopf nach Anspruch 7, dadurch gekennzeichnet, daß die die Bohrung (7) aufweisende Platte (14) abnehmbar an dem die Ausnehmung aufweisenden Teil (7) des Spannkopfes (6) befestigt ist.

9. Spannkopf nach einem der Ansprüche 1-8, dadurch gekennzeichnet, daß der Einspann- oder Klemmhebel (19) an der Außenseite des Spannkopfes (6), vorzugsweise an wenigstens einem dort vorgesehenen, die Längsachse (L) konzentrisch umschließenden ringförmigen Flansch (16, 18) schwenkbar gehalten ist.

10. Spannkopf nach einem der Ansprüche 1-9, dadurch gekennzeichnet, daß der Einspann- oder Klemmhebel (19) einen im wesentlichen radial zur Schwenkachse (20) verlaufenden und über die Umfangsfläche (8) des Spannkopfes (6) wegstehenden Hebelarm (22) aufweist.

-72844

Fig 1

12844

Fig 2

Fig 5

12844

Fig 4

Fig 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 652 193  (HIBBS) <br> * Zusammenfassung * <br> --- | 1 | B 25 B  21/00 // <br> F 16 B  13/14 |
| A | DE-A-2 948 040  (UPAT GMBH & CO.) <br> * Ansprüche * <br> --- | 1 | |
| A | GB-A-2 095 355  (HILTI AG) <br> * Spalte 2, Zeilen 31-61; Figur 2 * <br> --- | 1 | |
| A | DE-A-3 128 357  (USM CORP.) <br> --- | | |
| A | US-A-4 224 971  (MÜLLER et al.) <br> ----- | | |

**RECHERCHIERTE SACHGEBIETE (Int. Cl.4)**

B 23 D  45/00
E 21 D  21/00
B 23 B  45/00
B 23 Q  37/00
F 16 B  13/00
B 25 B  21/00
E 04 C   5/00

Der vorliegende Recherchenbericht wurde für alle Patentansprüche erstellt

| Recherchenort | Abschlußdatum der Recherche | Prüfer |
|---|---|---|
| BERLIN | 18-11-1988 | SCHAEFFLER C.A.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes
    Dokument

EPO FORM 1503 03.82 (P0403)